# EUROPÄISCHE PATENTSCHRIFT

(11) **EP 3 384 138 B1**
(45) Veröffentlichungstag und Bekanntmachung des Hinweises auf die Patenterteilung: **25.09.2019**
(21) Anmeldenummer: 16809669.1
(22) Anmeldetag: 29.11.2016
(51) Int. Cl.: F01N 3/20

(54) **REDUKTIONSMITTELSYSTEM MIT EINEM BEHEIZBAREN TANK UND VERWENDUNG EINER HEIZEINRICHTUNG ZUM BEHEIZEN EINES REDUKTIONSMITTELTANKS**
REDUCTION AGENT SYSTEM WITH A HEATABLE TANK AND USE OF A HEATING DEVICE FOR HEATING OF A REDUCTION AGENT TANK
SYSTÈME D'AGENT RÉDUCTEUR AVEC UN RÉSERVOIR RÉCHAUFFABLE ET UTILISATION D'UN DISPOSITIF DE CHAUFFAGE POUR CHAUFFER UN RÉSERVOIR D'AGENT RÉDUCTEUR

(30) Priorität: 02.12.2015 DE 102015015442; 05.07.2016 DE 102016112299
(43) Veröffentlichungstag der Anmeldung: 10.10.2018
(73) Patentinhaber: Eichenauer Heizelemente GmbH & Co. KG, 76870 Kandel (DE)
(72) Erfinder: STARCK, Roland, 76756 Bellheim (DE); WILDEGGER, Christian, 67714 Waldfischbach (DE)
(74) Vertreter: Twelmeier Mommer & Partner
(86) Internationale Anmeldenummer: PCT/EP2016/079106
(87) Internationale Veröffentlichungsnummer: WO 2017/093238

(56) Entgegenhaltungen:
- EP-A1- 1 602 805
- EP-A1- 1 741 888
- WO-A1-2007/126366
- WO-A1-2014/057021
- DE-A1-102009 035 272
- DE-A1-102010 011 151
- DE-U1- 20 314 557
- JP-A- 2005 090 431

## Beschreibung

Die Erfindung betrifft das Heizkonzept eines Reduktionsmittelsystems für Kraftfahrzeuge. Ein Reduktionsmittelsystem mit den im Oberbegriff des Anspruchs 1 angegebenen Merkmalen ist aus der WO 2014/057021 A bekannt.

Reduktionsmittelsysteme für Kraftfahrzeuge, beispielsweise mit dem Reduktionsmittel Harnstofflösung (AdBlue), erfordern eine Beheizung verschiedener Systemkomponenten wie Vorratstank, Dosiermodul, Filter, Verbindungsleitungen usw., da z.B. Harnstofflösung bei -11°C gefriert. Andererseits darf auch keine Erwärmung über 60°C stattfinden, da sich Harnstofflösung sonst zersetzt und Ammoniak frei wird.

Stand der Technik sind daher keramische Kaltleiterheizelemente, sogenannte PTC-Heizelemente, die selbsttätig ihre Temperatur nach oben begrenzen. Um möglichst effizient gefrorene Harnstofflösung in einem Tank auftauen zu können, ist das Heizelement bevorzugt im Tankinneren angeordnet. Dies bedingt aber Probleme bei der Abdichtung des Heizelementes, da Harnstofflösung sehr aggressiv ist und bei Undichtigkeit der Abdichtung das Heizelement zerstört wird. Weiterhin nachteilig bringt ein PTC-Heizelement seine Wärme nur lokal begrenzt in einen Bereich des Tanks ein, das heißt die Heizwirkung und damit das Auftauen der Harnstofflösung ist nicht im gesamten Tank erzielbar.

Aufgabe ist daher ein verbessertes Heizkonzept für ein Reduktionsmittelsystem, das das Auftauen des gesamten Tankinhalts beinhaltet.

Gelöst wird die Aufgabe durch ein Reduktionsmittelsystem nach Anspruch 1 sowie durch die Verwendung einer Heizeinrichtung gemäß Anspruch 12 zum Beheizen eines Reduktionsmitteltanks. Weitere Merkmale und vorteilhafte Ausführungsvarianten sind den Unteransprüchen und der folgenden Beschreibung zu entnehmen.

Gemäß Anspruch 1 wird der Tankinhalt nicht direkt durch ein Heizelement beheizt, sondern mit Hilfe eines Heizfluides, das in einem Heizfluidkreislauf zirkuliert. Dabei wird das Heizfluid in einer Heizeinrichtung mit einer Heizung erwärmt, beispielsweise mit einem Durchlauferhitzer. Die Heizeinrichtung ist über Verbindungsleitungen an ein Leitungssystem angeschlossen, das in oder an einem Reduktionsmitteltank verläuft, so dass die Wärme des Heizfluids an den Tankinhalt abgegeben werden kann. Die Heizeinrichtung bildet also zusammen mit dem in oder an einem Reduktionsmitteltank angeordneten Leitungssystem einen geschlossenen Heizfluidkreislauf. Der Heizfluidkreislauf ist von dem Motorkühlkreislauf des Fahrzeugs getrennt, so dass sich das Heizfluid nicht mit Motorkühlflüssigkeit vermischen kann. Der Heizfluidkreislauf eines erfindungsgemäßen Reduktionsmittelsystems kann aber thermisch über einen Wärmetauscher an den Motorkühlkreislauf gekoppelt sein.

Die Beheizung des Tankinhaltes mit Hilfe eines Heizfluides hat den Vorteil, dass bei gleicher Heizung, insbesondere gleichem Durchlauferhitzer, die jeweilige Tankbeheizung individuell an jeden Tank anpassbar ist. Weiterhin vorteilhaft lässt sich so mit wenig Aufwand eine nachhaltige, im ganzen Tank verteilte flexible Heizung realisieren. Durch den abgeschlossenen Heizfluidkreislauf kann dieser individuell auf das Reduktionsmittel abgestimmt werden. Somit lässt sich der Heizfluidkreislauf mit niedrigem Druck, einer angepassten Temperatur und einer reduktionsmittelverträglichen Flüssigkeit, beispielsweise einer Ethylenglykol-Wasser Mischung, betreiben. Das Heizfluid kann somit chemisch durchaus die gleiche Zusammensetzung oder Basis wie die Kühlflüssigkeit haben, andere Fluide sind aber ebenso denkbar.

Indem das elektrische Heizelement oder die Heizelemente der Heizeinrichtung außerhalb des Tanks angeordnet sind, ist äußerst vorteilhaft keine Abdichtung elektrischer Bauteile gegen das Reduktionsmittel erforderlich.

Ein weiterer Vorteil bei der Beheizung des Tanks durch ein Heizfluid und ein thermisch damit gekoppeltes, außerhalb des Tanks angeordnetes Heizelement ist weiterhin, dass es unabhängig von der Art des elektrischen Heizelementes an keiner Stelle im Tank zu örtlichen Überhitzungen, insbesondere an Stellen ohne wärmeabführenden Kontakt mit dem Tankfluid, durch die Beheizung kommen kann.

Das wärmeabgebende Leitungssystem am oder im Tank kann aus einem oder mehreren Schläuchen, Rohren und/oder Tankwandkanälen bestehen. Leitungssysteme, die wenigstens einen als Schlauch ausgebildeten Abschnitt aufweisen, werden auch als Schlauchsysteme bezeichnet.

In einer einfachen Form ist das Leitungssystem als wärmeabgebendes Bauteil aus mindestens einem flexiblen Schlauch ausgeführt, der in Abständen an der Tankwand befestigt sein kann. Der Schlauch könnte aber auch in einen Kanal, beispielsweise in Form einer Nut, an der bevorzugt inneren Tankwand oder eines Einbauteiles davon eingelegt sein. Bevorzugt ist das Leitungssystem, beispielsweise als Schlauchsystem, als zusammenhängend flächiges, flexibles Gebilde aus Kunststoff mit Kanälen für das Heizfluid ausgestaltet. Das Leitungs- oder Schlauchsystem kann dabei als geschlossene Fläche, aber auch mit Durchbrüchen oder nur als über Stegen zusammenhängendes Gebilde ausgestaltet sein. Äußerst bevorzugt besteht das Leitungs- oder Schlauchsystem dabei aus einer Reihe parallel verlaufender, dünner Kanäle (Rippen) mit jeweils einem Sammelraum am Zu- und Abfluss.

Dadurch lässt sich das gesamte wärmeabgebende Leitungssystem dünn und leicht mit wenig Materialaufwand herstellen. Vorteilhaft lässt sich so mit einer kleinen Fluidmenge eine große Fläche im Tank beheizen. Als Material für das Leitungs- oder Schlauchsystem muss kein hoch-temperaturbeständiger Kunststoff verwendet werden, sondern es kann beispielsweise ein Polyolefin wie Polypropylen oder Polyethylen verwendet werden. Diese Kunststoffe haben darüber hinaus den Vorteil, dass es im Falle einer Falschbetankung nicht gleich zu größeren Schäden am wärmeabgebenden Schlauchsystem kommt. Weiterhin vorteilhaft kann es bei Beheizung durch das Schlauchsystem nicht zu einer Überhitzung an aus der Harnstofflösung herausragenden Teilen kommen, wie dies bei elektrischen Heizelementen der Fall sein kann.

Denkbar ist die Herstellung von Schläuchen des Leitungssystems z.B. aus Endlosschlauchfolie, dessen Enden, mit Ausnahme von Zu- und Ablauf, und die Teilungsstege zwischen den Kanälen durch z.B. Rollschweißnähte verschlossen sind. Alternativ kann das Schlauchsystem auch durch zwei mit einander an den Abdichtstellen und Teilungsstegen verschweißten Folien hergestellt werden. Vorteil dieser Variante ist die freie Gestaltung der Außenkontur des Schlauchsystems durch anschließendes Ausstanzen der Kontur.

Zum Einbringen eines wärmeabgebenden Schlauchs des Leitungs- bzw. Schlauchsystems in den Tank weist der Tank bevorzugt eine Öffnung auf, die groß genug ist, um das Schlauchsystem in kompakter Form, z.B. zusammengerollt, hindurch stecken zu können. Die Öffnung ist danach durch einen Montageflansch dicht verschlossen, der zumindest zwei Durchbrüche für die Zuleitung von Zu- und Abfluss des Heizfluides aufweist.

In einer weiteren Ausführungsform ist das Leitungssystem aus zwei vorgeformten tiefgezogenen Kunststoffhalbschalen gebildet, die anschließend dicht miteinander verschweißt sind und dabei ein Kanalsystem ausbilden.

Die im Inneren des Tanks angeordneten Leitungen können an ihrer Innenseite Vorsprünge aufweisen, die verhindern, dass die Leitung von gefrorenem Tankinhalt soweit zusammengedrückt wird, dass ein Durchfluss von Heizfluid verhindert wird. Die Vorsprünge können beispielsweise erzeugt sein, indem die Leitung innen gerippt oder gewellt ausgeführt ist.

Die erfindungsgemäß verwendete Heizung ist bevorzugt ein Durchlauferhitzer, da auf diese Weise sehr schnell aufgeheiztes Heizfluid zum Auftauen von gefrorenem Inhalt des Harnstofftanks zur Verfügung steht. An Stelle von Durchlauferhitzern können aber auch sogenannte Boilersysteme verwendet werden, bei denen in einem Gefäß zunächst eine größere Menge Heizfluid erwärmt wird, oder Leitungsheizungen, mit denen Leitungsabschnitte des Heizfluidkreislaufes beheizt werden.

Das Heizelement der erfindungsgemäß verwendeten Heizung ist bevorzugt ein PTC-Heizelement, da PTC-Heizelemente eine selbstabregelnde Eigenschaft haben, beispielsweise ein keramisches PTC-Heizelement. Andere Heizelemente wie elektrisch leitender Kunststoff, Heizleiterbahnen (z.B. Dickschichttechnik), Stanzgitter, Rohrheizkörper oder dergleichen sind aber ebenfalls möglich.

Die Heizung kann zusätzlich einen Wärmetauscher zwischen dem Heizfluid und einem Wärmefluid, beispielsweise dem Motor-Kühlmittel des Kraftfahrzeugs, aufweisen. Denkbar ist beispielsweise ein Durchlauferhitzer, der als Wärmetauscher zwischen dem Heizfluid für das wärmeabgebende Schlauchsystem und einem Wärmefluid, insbesondere dem Kühlmittel eines Kraftfahrzeuges, ausgeführt ist. Dadurch kann die Wärme vom Kühlmittelkreislauf eines Kraftfahrzeuges indirekt zum Auftauen des Reduktionsmittels genutzt werden. Eine Heizung kann dabei einen Wärmetauscher, der Wärme von dem Wärmefluid auf das Heizfluid überträgt, mit einem elektrischen Durchlauferhitzer kombinieren.

Wird Kühlmittel des Motors direkt zur Erwärmung des Reduktionsmittels im Tank genutzt, so hat dies den Nachteil, dass die Fluidführung im Tank dem hohen Druck im Kühlmittelkreislauf standhalten muss. Entsprechend massiv ist das Kanalsystem im Tank auszuführen. Darüber hinaus kann das Kühlwasser verunreinigt sein. Dünne Kanäle würden so schnell undurchlässig. Weiterhin nachteilig ist die Unverträglichkeit von Kühlmittel und Harnstofflösung. So führen sowohl Verunreinigungen von Kühlmittel durch Harnstofflösung als auch verunreinigtes Kühlmittel im Harnstoffsystem zu hohen Systemschäden, die schon durch kleine Undichtigkeiten verursacht werden können.

Diese Nachteile verhindert ein Wärmetauscher zur Entkopplung von Heizfluidkreislauf als Niederdrucksystem und Kühlmittelkreis als Hochdrucksystem.

Bevorzugt verbunden mit einem Temperaturmanagement (Regelung oder Steuerung mit Temperaturerfassung) ist in einer vorteilhaften Weiterbildung die Heizung, beispielsweise der Durchlauferhitzer, sowohl als elektrische Heizung als auch als Wärmetauscher zwischen dem Heizfluid und einem Wärmefluid, insbesondere Kühlflüssigkeit des Motors, ausgeführt. Dabei erwärmt in einem ersten Zeitraum nach dem Start das elektrische Heizelement der kombinierten Heizung das Heizfluid. Hat die Kühlflüssigkeit des Motors dann eine vorgegebene Temperatur erreicht, kann das elektrische Heizelement abgeschaltet und, beispielsweise mit Hilfe eines Ventils, der Durchfluss der Kühlflüssigkeit durch die Heizung freigegeben werden, sodass diese nun als Wärmetauscher betrieben wird. Das Temperaturmanagement kann mit einer Steuereinrichtung durchgeführt werden, beispielsweise einem Mikroprozessor. Die Steuereinrichtung kann Steuern oder Regeln.

Durch die alternative Schaltung wird dabei eine Wärmeübertragung vom Heizelement an die Kühlflüssigkeit verhindert, d. h. die gesamte elektrische Heizenergie wird zur Erwärmung des Reduktionsmittels genutzt.

Das Leitungssystem kann mehrere, bevorzugt parallele geschaltete Heizkreise aufweisen, um z.B. einzelne Bereiche im Tank gezielt beheizen oder abschalten zu können. Wenn das Leitungssystem mehrere Heizkreise aufweist, kann eine Steuereinrichtung auch dazu genutzt werden, um diese Heizkreise gezielt an- oder abzuschalten, indem Ventile am Anfang bzw. Ende des betreffenden Heizkreises gezielt geöffnet oder geschlossen werden.

Bei einer vorteilhaften Ausgestaltung weist die Heizung einen Heizblock aus einem gut wärmeleitenden Material wie Aluminium auf. Dieser ist bevorzugt mit getrennten Durchflusskanälen für das Heizfluid und das Wärmefluid ausgeführt. Beispielsweise kann vorgesehen sein, dass der Heizblock ein Strangpressprofil ist, das mit mindestens drei Kanälen ausgeführt ist. In zwei Kanälen sind äußerst bevorzugt Rohre für einen guten Wärmeübergang zwischen dem Heizblock und dem Heizfluid, bzw. dem Wärmefluid, angeordnet. Für einen guten Wärmeübergang sind diese vorteilhaft in den Kanälen verpresst oder verlötet. Der dritte Kanal weist mindestens ein Heizelement, insbesondere ein verpresstes PTC-Element, auf.

Bevorzugt wird eine Heizung mit einem Heizblock verwendet, in dem nebeneinander mehrere, insbesondere wenigstens vier Leitungsabschnitte mit dazwischen frei liegenden Umlaufbögen für das Heizfluid verlaufen. Bevorzugt sind die Leitungsabschnitte dabei als Kanäle in dem Heizblock ausgebildet. Dies ermöglicht eine besonders gute Wärmeankopplung des Heizfluids an den Heizblock.

Bevorzugt wird das Heizfluid durch eine Pumpe in einem Zwangsumlauf geführt. Äußerst bevorzugt sind dabei Heizung und Pumpe in wärmeleitendem Kontakt zueinander, beispielsweise in Form einer kompakten Baueinheit, nach außen aber thermisch isoliert, ausgeführt. In diesem Fall kann auch die Abwärme der Pumpe zur Beheizung des Heizfluides beitragen und so energetisch genutzt werden. Auf eine Umwälzpumpe kann aber auch verzichtet werden, wenn eine Umwälzung durch Schwerkraft, Konvektion oder ein Wärmerohr (heat pipe) gewährleistet wird.

In einer besonders effizienten Weiterbildung wird die Heizung und das Heizfluid nicht nur zur Erwärmung des Tankinhaltes genutzt, sondern auch zur Erwärmung von weiteren Komponenten wie Filter, Fördermodul oder Reduktionsmittelleitungen, insbesondere der Dosierleitung. Dazu weisen die Komponenten geeignete, vom Heizfluid durchströmbare Kanäle auf. Bevorzugt ist dabei das Kanalsystem der weiteren Komponenten parallel zum Leitungssystem des Tanks ausgeführt.

Eine Steuereinrichtung der Heizeinrichtung kann dabei auch zur Steuerung der Pumpe genutzt werden, beispielsweise um die Pumpleistung zu regeln oder die Pumprichtung umzukehren. Eine Umkehrung der Pumprichtung ist insbesondere dann vorteilhaft, wenn mit dem Heizfluid neben dem Tank noch andere Systemkomponenten beheizt werden sollen. Durch die Umkehr der Pumprichtung kann dann die Priorisierung geändert werden, da dann eine andere Komponente das Heizfluid zuerst und somit mit einer höheren Temperatur erhält. Aber auch für den Fall, dass ein Leitungssystem mit nur einem einzigen Heizkreis im Tank vorhanden ist, kann eine Umkehr der Pumprichtung von Vorteil sein, um unterschiedliche Bereich des Tanks, wie zum Beispiel der Bereich des Ansaugrohres, zeitlich priorisiert beheizen zu können.

Alternativ zur Anordnung des wärmeabgebenden Schlauchsystems im Inneren des Tanks kann das Leitungssystem auch außen am Tank in wärmeleitender Verbindung zur Tankwand angeordnet sein. Die wärmeleitende Verbindung kann dabei beispielsweise über anextrudierte Stege und eine Spiegelschweißverbindung erfolgen. Weiterhin weist die der Tankwand abgewandte Seite des Leitungssystems bevorzugt eine Wärmeisolierschicht auf. Eine weitere Möglichkeit besteht darin, in der Tankwand Kanäle auszubilden, durch die das Heizfluid strömen kann.

Der Heizfluidkreislauf weist bevorzugt Befüllanschlüsse auf. Durch einen der Befüllanschlüsse kann Heizfluid in die Leitungen eingefüllt werden, während dann Luft aus einem anderen Befüllanschluss entweicht. Um beim Befüllen einen Fluidkurzschluss zwischen den Befüllöffnungen zu vermeiden, kann eine Sperre zwischen den beiden Befüllöffnungen angeordnet sein. Die Sperre kann beispielsweise ein Einwegeventil sein, durch das Heizfluid nur in einer einzigen Richtung hindurch strömen kann. Da die Sperre in der Regel nur beim Einfüllen des Heizfluids zur ersten Inbetriebnahme des Systems benötigt wird, kann die Sperre auch aus einem Material gefertigt sein, das sich nach dem Einfüllvorgang in dem Heizfluid auflöst. Beispielsweise kann die Sperre eine wasserlösliche Membran sein, wenn als Heizfluid eine wässrige Lösung verwendet wird, beispielsweise eine Ethylenglykol-Wasser Mischung.

Der Heizfluidkreislauf enthält bevorzugt einen Ausdehnungsraum, der temperaturbedingte Volumenänderungen des Heizfluids kompensiert. Der Ausdehnungsraum kann beispielsweise In Form eines Gefäßes mit einer elastischen Wand ausgebildet sein, so dass sich das Volumen des Gefäßes bei einer thermisch bedingten Ausdehnung des Heizfluids anpassen kann. Im einfachsten Fall kann der Ausdehnungsraum als ein elastomerer Ballon ausgebildet sein. Der Ausdehnungsraum kann auch durch einen mit Gas oder Schaumstoff gefüllten Behälter gebildet sein. Bei einer thermisch bedingten Ausdehnung des Heizfluids kann dann der Inhalt des Behälters komprimiert werden. Bevorzugt ist der Ausdehnungsraum außerhalb des Tanks angeordnet. Denkbar ist aber auch die Anordnung im Tank, wobei der Ausdehnungsraum dann gleichzeitig als Expansionsraum für das sich beim Einfrieren ausdehnende Reduktionsmittel dienen kann.

Weitere Einzelheiten und Vorteile der Erfindung werden an Ausführungsbeispielen unter Bezugnahme auf die beigefügten Zeichnungen erläutert. Gleiche und einander entsprechende Komponenten sind darin mit übereinstimmenden Bezugszahlen bezeichnet. Es zeigen:
- Fig. 1: eine schematische Skizze einer erfindungsgemäßen Ausgestaltung;
- Fig. 2: einen Reduktionsmitteltank mit im Inneren angeordneten Leitungssystem;
- Fig.3: eine schematische Darstellung einer Heizeinrichtung zum Beheizen eines Reduktionsmitteltanks mit geöffnetem Gehäuse; und
- Fig. 4: eine weitere Ansicht zu Fig. 3.

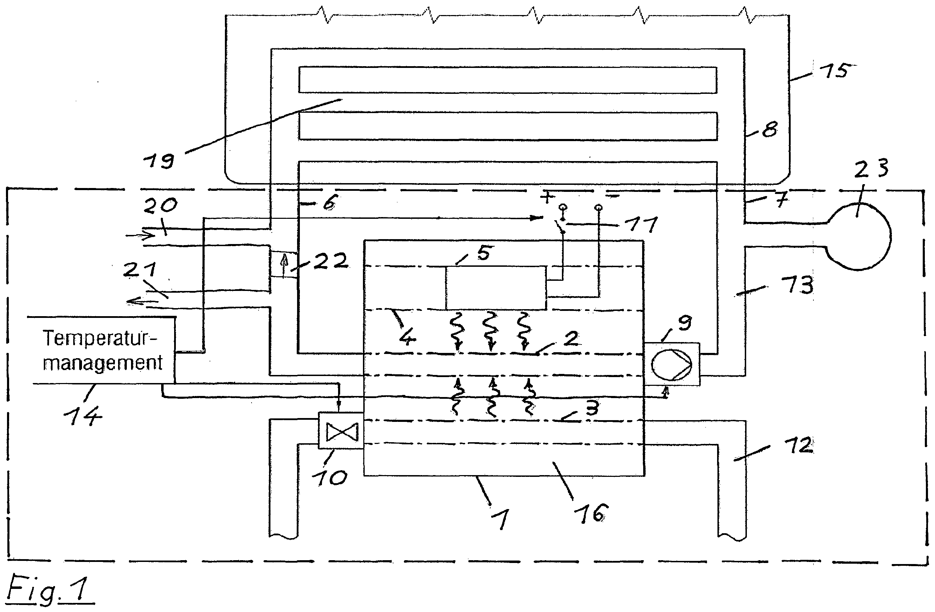

Fig. 1 zeigt die Skizze einer Ausführungsvariante mit einem Reduktionsmittelsystem für Kraftfahrzeuge, das einen Reduktionsmitteltank 15 und eine Heizeinrichtung 40 zum Beheizen des Reduktionsmitteltanks 15 aufweist. Der Reduktionsmitteltank 15 weist ein Leitungssystem 8 auf, das von einem Heizfluid 13 durchströmt wird und dabei seine Wärme an den Reduktionsmitteltank 15 bzw. dessen Tankinhalt abgibt. Die Heizeinrichtung 40 weist eine Heizung 1 zum Erwärmen des Heizfluids 13 auf, die über Leitungen 6, 7 an das Leitungssystem 8 angeschlossen ist. Das Leitungssystem 8 ist fluidisch von dem Heizkreis des Motorkühlsystems des Fahrzeugs getrennt. Das Heizfluid 13 kann sich also nicht mit Kühlflüssigkeit des Motors vermischen.

Bei dem gezeigten Ausführungsbeispiel enthält die Heizung 1 sowohl einen elektrischen Durchlauferhitzer als auch einen Wärmetauscher zwischen dem Heizfluid 13 und dem Kühlmittel 12 des Motors als Wärmefluid. Der Durchlauferhitzer 1, beispielsweise mit einem Aluminiumstrangpressprofil 16, weist drei getrennte Kanäle 2, 3, 4, auf. Der erste Kanal 2 ist der Durchflusskanal für das Heizfluid 13, der zweite Kanal 3 ist der Durchflusskanal für das Wärmefluid 12, bevorzugt Kühlmittel eines Fahrzeugmotors, und im dritten Kanal 4 ist das elektrische Heizelement 5, bevorzugt ein PTC-Heizelement angeordnet. In den beiden Fluidkanälen 2, 3 können separate Durchflussrohre (nicht gezeigt) in gut wärmeleitendem Kontakt zum Strangpressprofil 16, beispielsweise durch Verpressen oder Verlöten, angeordnet sein. Ebenfalls in gut wärmeleitender Verbindung zum Strangpressprofil 16 ist das PTC-Heizelement 5 klemmend, beispielsweise durch ein Federelement oder ebenfalls durch Verpressen, im dritten Kanal 4 gehalten.

Leitungen 6, 7 führen das Heizfluid zum, hier im Tank angeordneten, Leitungssystem 8. Mit Hilfe einer Pumpe 9 findet ein Zwangsumlauf des Heizfluides 13 zwischen Durchlauferhitzer 1 und Leitungssystem 8 statt. Eine Wärmeübertragung auf das Heizfluid 13 im Durchlauferhitzer 1 kann alternativ sowohl vom PTC-Heizelement 5 als auch vom Kühlmittel 12 erfolgen. Eine gleichzeitige Beheizung dagegen würde zu einem Wärmeeintrag in das Kühlwasser 12 führen und wäre daher ineffizient. Deshalb öffnet ein Ventil 10 für die Kühlmitteldurchströmung des Durchlauferhitzers 1 gesteuert durch ein Wärmemanagementsystem 14 nur bei geöffnetem Schalter 11, d,h. abgeschaltetem elektrischen Heizelement 5.

Der von der Heizeinrichtung 40 und dem Leitungssystem 8 gebildete Heizfluidkreislauf weist zwei Befüllanschlüsse 20, 21 auf. Durch einen dieser Befüllanschlüsse kann Heizfluid in die Leitungen eingefüllt werden, während dann Luft aus dem anderen Befüllanschluss entweicht. Um beim Befüllen einen Fluidkurzschluss zwischen den beiden Befüllöffnungen 20, 21 zu vermeiden, kann eine Sperre 22 zwischen den beiden Befüllöffnungen angeordnet sein. Die Sperre 22 kann beispielsweise ein Einwegeventil sein, durch das Heizfluid nur in einer einzigen Richtung hindurch strömen kann. Da die Sperre 22 in der Regel nur beim Einfüllen des Heizfluids zur ersten Inbetriebnahme des Systems benötigt wird, kann die Sperre 22 auch aus einem Material gefertigt sein, das sich nach dem Einfüllvorgang in dem Heizfluid auflöst. Beispielsweise kann die Sperre 22 eine wasserlösliche Membran sein, wenn als Heizfluid eine wässrige Lösung verwendet wird, beispielsweise eine Ethylenglykol-Wasser Mischung.

Der Heizfluidkreislauf enthält bevorzugt einen Ausdehnungsraum 23, der temperaturbedingte Volumenänderungen des Heizfluids kompensiert. Der Ausdehnungsraum kann beispielsweise in Form eines Gefäßes mit einer elastischen Wand ausgebildet sein, so dass sich das Volumen des Gefäßes bei einer thermisch bedingten Ausdehnung des Heizfluids anpassen kann. Im einfachsten Fall kann der Ausdehnungsraum 23 als ein elastomerer Ballon ausgebildet sein. Der Ausdehnungsraum 23 kann auch durch einen mit Gas oder Schaumstoff gefüllten Behälter gebildet sein. Bei einer thermischen bedingten Ausdehnung des Heizfluids kann dann der Inhalt des Behälters komprimiert werden.

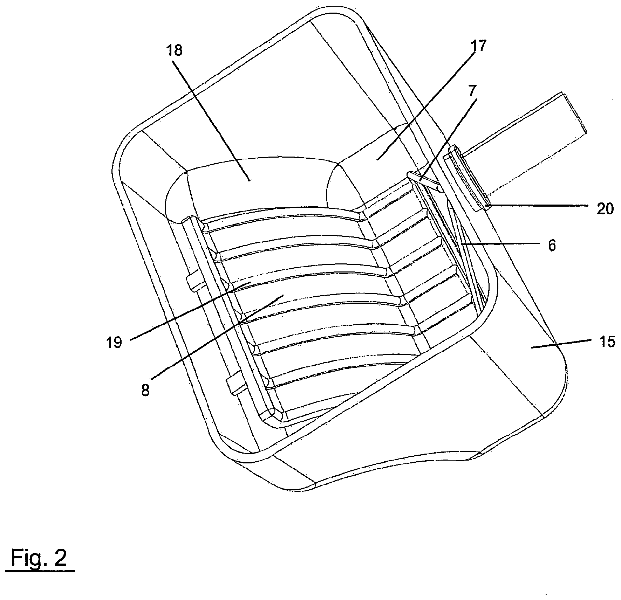

Fig.2 zeigt eine beispielhafte Ausgestaltung eines Reduktionsmitteltanks 15 mit einem im Innenraum angeordnetem Leitungssystem 8, das z.B. ein Schlauchsystem sein kann. In dieser Ausgestaltung ist das Leitungssystem 8 als geschlossenes, flächiges Gebilde ausgeführt, das sich entlang des Tankbodens 17 und einer Wandschrägen 18 erstreckt. Von den Leitungen 6, 7 und den angeschlossenen Sammelräumen ausgehend zweigen einzelne dünne Kanäle 19 ab, die parallel ausgeführt verlaufen. Parallel ausgeführte Kanäle haben den Vorteil, dass der Gesamtdurchfluss auch bei dünnen Kanälen ohne größeren Strömungswiderstand erfolgen kann, so dass die Unterbrechung eines einzelnen Kanals nicht gleich zum Gesamtausfall führt und die Wärmeabgabe gleichmäßiger über die gesamten Fläche erfolgt. Die Anordnung auch an der Wandschrägen 18 ist dadurch ermöglicht, weil es im Gegensatz zu einer elektrischen Beheizung bei der erfindungsgemäßen Ausgestaltung mit einem heizfluiddurchflossenen Leitungssystem nicht schädlich ist, wenn ein Teil des Leitungssystems aus dem Reduktionsmittel herausragt. Es kann in diesem Bereich trotzdem nicht zu einer Überhitzung kommen. Es findet dann lediglich keine Wärmeübertragung statt.

Außen an der Tankwand ist ein Montageflansch 25 angebracht, der eine Öffnung zum Einbringen des Leitungssystems 8 in den Tank verschließt. Dabei weist der Montageflansch 25 mindestens die zwei Anschlüsse für die Leitungen (nicht gezeigt) auf.

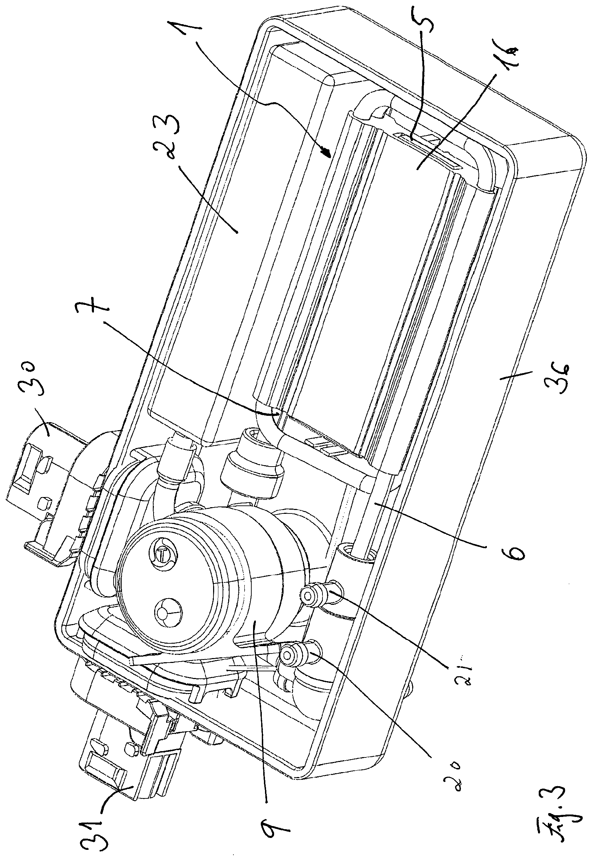

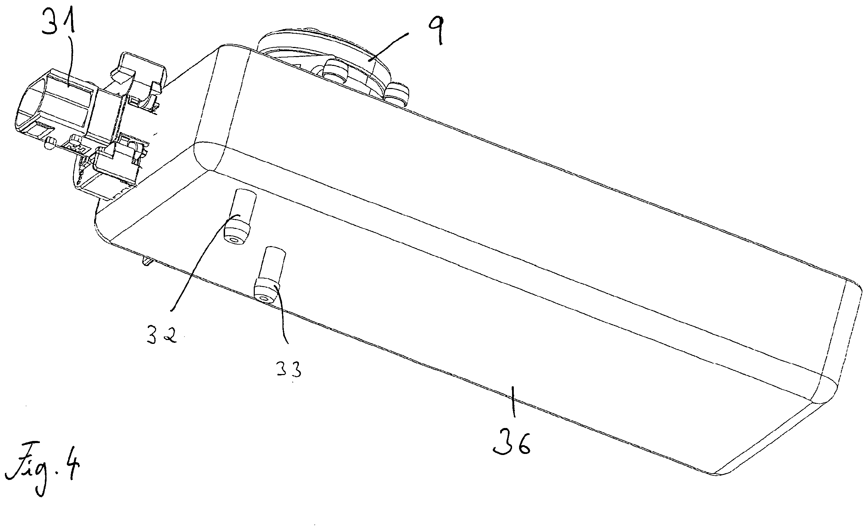

Figur 3 und 4 zeigen schematisch ein Ausführungsbeispiel einer erfindungsgemäßen Heizeinrichtung 40, bei dem Heizfluid 13 in Leitungen 6,7, beispielsweise Rohren oder Schläuchen, von einem Durchlauferhitzer 1 erwärmt wird. Der Durchlauferhitzer 1 weist einen Heizblock, bevorzugt mit einem Strangpressprofil 16, beispielsweise aus Aluminium, auf, in dem ein oder mehrere Heizelemente 5, beispielsweise keramische PTC Heizelemente, angeordnet sind. Die Leitungen 6,7 können an Kanäle des Strangpressprofils 16 angeschlossen sein oder in den Kanälen des Strangpressprofils 16 liegen.

Die Leitungen 6, 7 können über die Pumpe 9 und eventuell andere Bauteile, wie etwa Fluidmesser oder sonstige Sensoren, über Anschlüsse 32,33 an ein Leitungssystem angeschlossen werden, dessen Leitungen an oder in einem nicht dargestellten Tank verlaufen, um dessen Inhalt zu erwärmen. Diese Leitungen können beispielsweise Kanäle in einer Tankwand, oder Leitungen, beispielsweise Rohre oder Schläuche sein, die an einer Tankwand innen oder außen anliegen oder im Innenraum eines Tanks verlaufen.

Die Heizeinrichtung 40 weist in diesem Ausführungsbeispiel eine Pumpe 9 auf, um einen Umlauf des Heizfluids 13 zu bewirken. Ein Umlauf kann aber auch ohne eine Pumpe bewirkt werden, beispielsweise durch Konvektion oder mittels eine Wärmerohrs. Wärmerohre werden manchmal auch als "heat pipe" bezeichnet. Zur Stromversorgung der Pumpe 9 und der elektrischen Heizung 1 sowie zum Erhalt von Steuersignalen kann die Heizeinrichtung einen oder mehrere elektrische Steckverbinder 30, 31 aufweisen.

Die Heizeinrichtung 40 weist weiterhin zwei Befüllanschlüsse 20, 21 zum Einfüllen von Heizfluid auf. Dabei kann zwischen den beiden Befüllanschlüssen 20, 21 eine Sperre angeordnet sein, die einen Fluidkurzschluss beim Befüllen der Leitungen verhindert.

Die Heizeinrichtung 40 weist in diesem Ausführungsbeispiel einen Ausdehnungsraum 23 auf, der temperaturbedingte Volumenänderungen des Heizfluids kompensiert. Der Ausdehnungsraum 23 ist bei dem gezeigten Beispiel als ein Behälter ausgeführt, der einen gasgefüllten Innenraum hat. Der gasgefüllten Innenraum kann von dem Heizfluid durch eine elastische Wand, beispielsweise eine elastomere Membran abgetrennt sein. Wenn sich das Heizfluid ausdehnt, drückt es gegen die elastomere Membran, so dass der gasgefüllte Innenraum komprimiert wird. Denkbar ist aber auch ein Ausdehnungsraum im Tankinneren.

Die Heizeinrichtung 40 kann ein Gehäuse 36 aufweisen. Vorteilhaft kann so eine leicht handhabbare und mit geringem Aufwand in einem Fahrzeug montierbare Einheit geschaffen werden. Zudem kann ein Gehäuse 36 eine thermische Isolation der elektrischen Heizung von der Umgebung bewirken, so dass die Heizenergie effizient zum Erwärmen des Heizfluids 13 genutzt werden kann.

## Patentansprüche

1. Reduktionsmittelsystem für Kraftfahrzeuge mit einem Reduktionsmitteltank (15) und einer Heizeinrichtung (40) mit einer Heizung (1) zum Beheizen des Reduktionsmitteltanks (15),
wobei die Heizung (1) ein elektrisches Heizelement (5) aufweist, das außerhalb des Reduktionsmitteltanks (15) angeordnet ist, und
der Reduktionsmitteltank (15) ein Leitungssystem (8) aufweist, das von einem in der Heizung (1) erwärmten Heizfluid (13) durchströmbar ist und getrennt von einem Motorkühlkreislauf des Fahrzeugs zusammen mit der Heizeinrichtung (40) einen eigenen Heizfluidkreislauf bildet, **dadurch gekennzeichnet, dass** die Heizung (1) über Leitungen (6, 7) an das Leitungssystem (8) angeschlossen ist.

2. Reduktionsmittelsystem nach Anspruch 1, **dadurch gekennzeichnet, dass** das elektrische Heizelement (5) ein PTC-Heizelement ist.

3. Reduktionsmittelsystem nach einem der vorstehenden Ansprüche, **dadurch gekennzeichnet, dass** die Heizung einen elektrisch beheizten Durchlauferhitzer aufweist, der das elektrische Heizelement (5) enthält.

4. Reduktionsmittelsystem nach einem der vorstehenden Ansprüche, **dadurch gekennzeichnet, dass** die Heizung (1) zusätzlich als Wärmetauscher zwischen dem Heizfluid (13) und einem Wärmefluid (12), insbesondere dem Kühlmittel eines Kraftfahrzeuges, ausgeführt ist.

5. Reduktionsmittelsystem nach mindestens einem der vorangegangenen Ansprüche, **dadurch gekennzeichnet, dass** ein Abschnitt des Leitungssystems (8) in einer Wand des Reduktionsmitteltanks (15) verläuft.

6. Reduktionsmittelsystem nach einem der vorstehenden Ansprüche, **dadurch gekennzeichnet, dass** zumindest ein Abschnitt des Leitungssystems (8) von einem Schlauch gebildet wird.

7. Reduktionsmittelsystem nach Anspruch 6, **dadurch gekennzeichnet, dass** wenigstens ein Teil des von einem Schlauch gebildeten Abschnitts des Leitungssystems in dem Reduktionsmitteltank (15) angeordnet ist und der Schlauch dort an seiner Innenseite Vorsprünge aufweist, die verhindern, dass der Schlauch von gefrorenem Tankinhalt soweit zusammengedrückt wird, dass ein Durchfluss von Heizfluid (13) verhindert wird.

8. Reduktionsmittelsystem nach einem der vorstehenden Ansprüche, **dadurch gekennzeichnet, dass** der Heizfluidkreislauf zwei Befüllanschlüsse (20, 21) zum Einfüllen von Heizfluid (13) aufweist, wobei zwischen den beiden Befüllanschlüssen (20, 21) eine Sperre (22) angeordnet ist, die einen Fluidkurzschluss beim Befüllen des Leitungssystems (8) verhindert.

9. Reduktionsmittelsystem nach Anspruch 8, **dadurch gekennzeichnet, dass** die Sperre (22) ein Einwegventil ist oder sich bei Kontakt mit dem Heizfluid (13) auflöst.

10. Reduktionsmittelsystem nach einem der vorstehenden Ansprüche, **dadurch gekennzeichnet, dass** der Heizfluidkreislauf einen Ausdehnungsraum (23) enthält, der temperaturbedingte Volumenänderungen des Heizfluids (13) kompensiert.

11. Reduktionsmittelsystem nach einem der vorstehenden Ansprüche, **dadurch gekennzeichnet, dass** das Leitungssystem (8) an eine Pumpe (9) angeschlossen ist, um einen Umlauf des Heizfluids (13) zu bewirken.

12. Verwendung einer elektrischen Heizeinrichtung (40) zum Beheizen eines Reduktionsmitteltanks (15), welcher ein Leitungssystem (8) aufweist, das von einem in der elektrischen Heizeinrichtung (40) erwärmten Heizfluid (13) durchströmbar ist, wobei das Leitungssystem (8) zusammen mit der elektrischen Heizeinrichtung (40) einen Heizfluidkreislauf bildet, der von einem Motorkühlkreislauf des Fahrzeugs fluidisch getrennt ist, **dadurch gekennzeichnet, dass** die elektrische Heizeinrichtung (40) über Leitungen (6, 7) an das Leitungssystem (8) angeschlossen ist.

## Claims

1. A reducing agent system for motor vehicles comprising a reducing agent tank (15) and a heating device (40) with a heater (1) for heating the reducing agent tank (15),
wherein the heater (1) has an electric heating element (5) which is arranged outside of the reducing agent tank (15), and
wherein the reducing agent tank (15) has a pipe system (8) which allows heating fluid (13) heated in the heater (1) to flow through it and which, together with the heating device (40), forms an autonomous heating fluid circuit that is separate from an engine cooling circuit of the vehicle, **characterized in that** the heater (1) is connected to the pipe system (8) via pipes (6, 7).

2. The reducing agent system according to Claim 1, **characterized in that** the electric heating element (5) is a PTC heating element.

3. The reducing agent system according to any one of the preceding claims, **characterized in that** the heater has an electrically heated flow-through heater, which contains the electric heating element (5).

4. The reducing agent system according to any one of the preceding claims, **characterized in that** the heater (1) additionally is designed as a heat exchanger between the heating fluid (13) and a thermal fluid (12), in particular the coolant of a motor vehicle.

5. The reducing agent system according to any one of the preceding claims, **characterized in that** a section of the pipe system (8) extends inside a wall of the reducing agent tank (15).

6. The reducing agent system according to any one of the preceding claims, **characterized in that** at least a section of the pipe system (8) is a hose.

7. The reducing agent system according to Claim 6, **characterized in that** at least a portion of the section of the pipe system formed by a hose is arranged inside the reducing agent tank (15) and that the hose has interior protrusions in this portion which prevent the hose from being compressed by the frozen contents of the tank to such an extent that the flow of heating fluid (13) is prevented.

8. The reducing agent system according to any one of the preceding claims, **characterized in that** the heating fluid circuit has two filling connections (20, 21) for filling heating fluid (13), wherein a barrier (22) is arranged between the two filling connections (20, 21) which prevents a fluid bypass during the filling of the pipe system (8).

9. The reducing agent system according to Claim 8, **characterized in that** the barrier (22) is a one-way valve or that it dissolves upon contact with the heating fluid (13).

10. The reducing agent system according to any one of the preceding claims, **characterized in that** the heating fluid circuit contains an expansion chamber (23) which compensates for temperature-related changes in volume of the heating fluid (13).

11. The reducing agent system according to any one of the preceding claims, **characterized in that** the pipe system (8) is connected to a pump (9) to cause a circulation of the heating fluid (13).

12. A use of an electric heating device (40) for heating a reducing agent tank (15) which has a pipe system (8) which allows heating fluid (13) heated in the electric heating device (40) to flow through it, wherein the pipe system (8), together with the electric heating device (40), forms a heating fluid circuit that is fluidically separate from an engine cooling circuit of the vehicle, **characterized in that** the electric heating device (40) is connected to the pipe system (8) via pipes (6, 7).

## Revendications

1. Système d'agent réducteur pour véhicules automobiles avec un réservoir d'agent réducteur (15) et un système de chauffage (40) avec un chauffage (1) destiné à chauffer le réservoir d'agent réducteur (15),
sachant que le chauffage (1) comporte un élément chauffant électrique (5), qui est disposé en dehors du réservoir d'agent réducteur (15), et
le réservoir d'agent réducteur (15) comporte un système de conduits (8), qui peut être traversé par un fluide chauffant (13) réchauffé par un chauffage (1) et forme avec le système de chauffage (40) un circuit de fluide chauffant propre séparé d'un circuit de refroidissement du moteur du véhicule, **caractérisé en ce que** le chauffage (1) est raccordé au système de conduits (8) par le biais de conduites (6, 7).

2. Système d'agent réducteur selon la revendication 1, **caractérisé en ce que** l'élément chauffant électrique (5) est un élément chauffant à coefficient de température positif (CTP).

3. Système d'agent réducteur selon l'une quelconque des revendications précédentes, **caractérisé en ce que** le chauffage comporte un réchauffeur continu à chauffage électrique, qui contient l'élément chauffant électrique (5).

4. Système d'agent réducteur selon l'une quelconque des revendications précédentes, **caractérisé en ce que** le chauffage (1) est exécuté en plus comme échangeur de chaleur entre le fluide chauffant (13) et un fluide thermique (12), en particulier le réfrigérant d'un véhicule automobile.

5. Système d'agent réducteur selon au moins l'une quelconque des revendications précédentes, **caractérisé en ce qu'**une section du système de conduits (8) est installée dans une paroi du réservoir d'agent réducteur (15).

6. Système d'agent réducteur selon l'une quelconque des revendications précédentes, **caractérisé en ce qu'**au moins une section du système de conduits (8) est formée par un tuyau flexible.

7. Système d'agent réducteur selon la revendication 6, **caractérisé en ce qu'**au moins une partie de la section du système de conduits formée par un tuyau flexible est disposée dans le réservoir d'agent réducteur (15) et le tuyau flexible y comporte des saillies sur sa face intérieure, qui évitent que le tuyau flexible ne soit comprimé par un contenu de réservoir gelé de manière à éviter un écoulement de fluide chauffant (13).

8. Système d'agent réducteur selon l'une quelconque des revendications précédentes, **caractérisé en ce que** le circuit de fluide chauffant comporte deux raccords de remplissage (20, 21) pour remplir de fluide chauffant (13), sachant qu'un blocage (22) est disposé entre les deux raccords de remplissage (20, 21), qui évite un court-circuit de fluide lors du remplissage du système de conduits (8).

9. Système d'agent réducteur selon la revendication 8, **caractérisé en ce que** le blocage (22) est une soupape unidirectionnelle ou se déclenche lors du contact avec le fluide chauffant (13).

10. Système d'agent réducteur selon l'une quelconque des revendications précédentes, **caractérisé en ce que** le circuit de fluide chauffant contient un compartiment d'extension (23), qui compense les variations de volume du fluide chauffant (13) conditionnées par la température.

11. Système d'agent réducteur selon l'une quelconque des revendications précédentes, **caractérisé en ce que** le système de conduits (8) est raccordé à une pompe (9) pour actionner une circulation du fluide chauffant (13).

12. Utilisation d'un système de chauffage électrique (40) pour chauffer un réservoir d'agent réducteur (15), lequel comporte un système de conduits (8), qui peut être traversé par un fluide chauffant (13) réchauffé par un système de chauffage électrique (40), sachant que le système de conduits (8) forme avec le système de chauffage électrique (40) un circuit de fluide chauffant qui est séparé de point de vue fluide d'un circuit de refroidissement du moteur du véhicule, **caractérisée en ce que** le système de chauffage électrique (40) est raccordé au système de conduits (8) par le biais de conduites (6, 7).
